# EUROPEAN PATENT SPECIFICATION

(11) **EP 1 860 351 B1**
(45) Date of publication and mention of the grant of the patent: **15.07.2009**
(21) Application number: 07010077.1
(22) Date of filing: 21.05.2007
(51) Int. Cl.: F16H 61/02, F16H 63/42

(54) **Transmission operation instruction device**
Anweisung-Vorrichtung zum Betätigen eines Getriebes
Dispositif d'instruction pour la opération d'une transmission

(30) Priority: 26.05.2006 JP 2006147198
(43) Date of publication of application: 28.11.2007
(73) Proprietor: DENSO CORPORATION, Kariya-city, Aichi-pref. 448-8661 (JP)
(72) Inventor: Naritani, Satoshi, Kariya-city Aichi-pref., 448-8661 (JP); Furukawa, Kyouko, Kariya-city Aichi-pref., 448-8661 (JP)
(74) Representative: Winter, Brandl, Fürniss, Hübner Röss, Kaiser, Polte Partnerschaft Patent- und Rechtsanwaltskanzlei

(56) References cited:
- EP-A- 1 386 776
- EP-A- 1 775 501
- EP-A2- 0 106 789
- GB-A- 2 084 524
- GB-A- 2 319 635
- JP-A- 11 311 332

## Description

### BACKGROUND OF THE INVENTION

### 1. Field of the invention

The present invention relates to a transmission operation instruction device for a manual transmission mounted on a vehicle.

### 2. Description of the Related Art

There is a vehicle equipped with a transmission operation instruction device capable of assisting the driver of a vehicle to operate a manual transmission. Such a transmission operation instruction device is capable of displaying various instructions for performing optimum transmission operations to shift a high gear position or to shift a low gear position such as up-shift/down-shift operations by the driver of a vehicle. The transmission operation instruction device compares a request gear position and a current gear position set by the driver of the vehicle, and outputs the comparison result to a transmission operation instruction display unit as a shift display unit, where the request gear position is obtained based on a unique shift point line corresponding to parameters of a vehicle speed and an accelerator pedal opening ratio (or a throttle opening ratio). On receiving the comparison result, the transmission operation instruction display unit as the shift display unit informs an optimum timing of performing the transmission operation to the driver of the vehicle.

However, because related-art techniques determine the optimum request gear position based only on both the vehicle speed and the accelerator pedal opening ratio, there is a probability that the transmission operation instruction device generates and outputs the instruction for the transmission operation regardless of current traffic condition or state, current road condition, weather condition, and the driver's will or intent.

In order to avoid such a drawback of the related art techniques, Japanese patent laid open publication No. JP S61-24621 provides an improved technique which suppresses frequency of performing the transmission operation when a vehicle travels on an uphill road or a downhill road. However, such a related-art technique JP S61-24621 is not always satisfied in views of the driver's safety and vehicle safety. For example, when the driver of a vehicle finds himself in a traffic jam, or congestion and decreases the accelerator pedal opening ratio in order to decrease the vehicle speed, there is a limit in ability of the transmission operation instruction device for matching the driver's intent of the vehicle with the instruction to be output to the transmission operation instruction display unit to display the instruction for the transmission operation. In other wards, under such a traffic situation, the transmission operation instruction device cannot determine or recognize whether the driver intends to decrease the current vehicle speed.

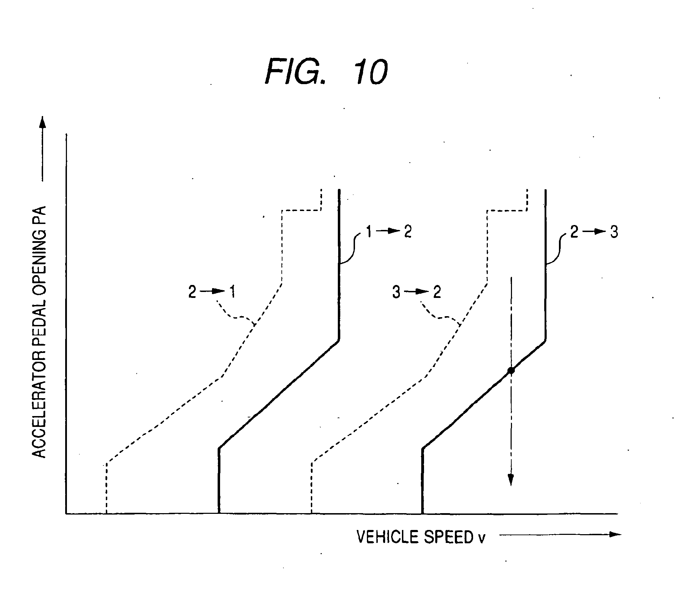

FIG. 10 is a characteristic view showing shift point lines. When the driver finds himself in a traffic jam and then decreases the accelerator pedal opening ratio, as shown by an alternate long and short dash line in FIG. 10, the transmission operation instruction device shifts a request gear position to a high gear position side in order to avoid an engine braking for a fuel economy driving mode of the vehicle. This engine braking is the act of using the energy-requiring compression stroke of an internal combustion engine of the vehicle to dissipate energy and slow down the vehicle. That is, the transmission operation instruction device provides the instruction for the transmission operation to the driver regardless of considering the actual traffic condition such as the occurrence of traffic congestion (or a traffic jam) and a traffic accident, and also regardless of the driver's intent or will. Further, in case that many vehicles travel on a road, namely, in case of causing the traffic congestion by a plurality of vehicles, the frequency of outputting the instruction for the transmission operation increases according to increasing the number of acceleration/deceleration. This causes the driver's workload.

Document EP 1 386 776 A2, which discloses the preamble of claim 1, describes an evaluation system for vehicle operating conditions which is applied to a vehicle provided with an engine and a manual transmission connected to the engine. The system comprises a sensor for detecting the operating conditions of the engine and a controller. On the basis of the operating conditions of the engine, the controller determines whether or not the fuel economy of the vehicle would be improved by shifting the transmission upward from the current gear position to a gear position one step further toward a HIGH side, and instructs a driver to shift the transmission upward when it is determined that the fuel economy of the vehicle would be improved by shifting the transmission upward.

Document GB 2 319 635 A describes a vehicle drive force controller which is responsive to regional attributes or conditions. The controller comprises a navigation device, a microprocessor and a sensor responsive to the operation amount of the accelerator pedal. A regional attribute for a particular region in which a vehicle is travelling is detected using the navigation device. Regional attributes may include a traffic jam, a mountainous area (road slope) or an urban area. A modified vehicle drive force characteristic is calculated by the microprocessor in accordance with the regional attribute. The drive force characteristic might be the throttle gain of an electric throttle, the speed change pattern of an automatic transmission, or the air-fuel ratio. An operation amount of an accelerator pedal operated by a driver is detected and the drive force characteristic is only updated to its modified value if the accelerator operation is zero. If the acceleration amount is not zero, the original drive force characteristic is maintained, irrespective of the change in regional attribute. In one alternative embodiment a low gear is selected, or higher gears are prohibited, if an urban area attribute is detected.

### SUMMARY OF THE INVENTION

It is an object of the present invention to provide a transmission operation instruction device for a manual transmission mounted on a vehicle capable of generating and outputting instructions for transmission operation suitable for the driver's intent.

The object is solved by the features of the independent claim 1. The dependent claims are directed to preferred embodiments of the invention.

To achieve the above purposes, the present invention provides an improved transmission operation instruction device for a manual transmission of a vehicle. In particular, when information provided from a car navigation unit indicates occurrence of a traffic congestion in a direction of travel of the vehicle (or own vehicle), a control means estimates that the vehicle just reaches a tail end of a train of vehicles in the traffic congestion when detecting decreasing an accelerator pedal opening ratio, and the control means then limits the output of the instruction, which indicates a transmission operation of shifting the current gear position to a higher gear position, to a transmission operation instruction display unit until an acceleration speed of the vehicle becomes a positive value.

When the accelerator pedal opening ratio is decreased, there is a tendency to output the instruction for the transmission operation to shift the current gear position to a high gear position in order to enhance the fuel consumption efficiency of the vehicle. However, the driver generally intends to decrease the vehicle speed when the traffic congestion occurs on the road in front of the vehicle in the direction of travel of the vehicle. The control means in the transmission operation instruction device according to the present invention estimates that own vehicle just reaches a tail end of a train of vehicles in a traffic congestion when detecting the decrease of the accelerator pedal opening ratio, and then limits the output of the instruction, which indicates a transmission operation of shifting the current gear position to a high gear position, to the transmission operation instruction display unit until an acceleration speed of the vehicle becomes a positive value. Such a control avoids the display of the instruction for the transmission operation to shift the current gear position to a high gear position of a weak engine braking of the vehicle. It is thereby possible to eliminate the driver's confusion.

In the transmission operation instruction device as another aspect of the present invention, an optimum gear position calculation means calculates an optimum gear position corresponding to a vehicle speed and an accelerator pedal opening ratio or a throttle opening ratio based on a shift point line. In particular, the control means estimates the occurrence of traffic congestion in a direction of travel of the vehicle based on the change of the accelerator pedal opening ratio, the driver's pedal braking, and the change of the vehicle speed when the information provided from the car navigation unit indicates that the vehicle travels in an urban area. The control means switches a current shift point line to a shift point line which is small in number for generating the instruction for the transmission operation, and instructs the transmission operation instruction display unit to display the instruction for the transmission operation. Under the driving situation where own vehicle travels in an urban area where many vehicles travel and the vehicle speed of each vehicle is always changed, the instructions for the transmission operation is frequently generated. This increases the driver's workload. According to the present invention, the transmission operation instruction device estimates the occurrence of the traffic congestion in the direction of travel of the vehicle and decreases the number of the instructions for the transmission operation as low as possible in order to avoid the driver's workload.

In the transmission operation instruction device as another aspect of the present invention, the control means selects one of a shift point line which firstly considers a fuel consumption efficiency and a shift point line which firstly considers a easy acceleration/deceleration by selecting a low gear position based on a change of the accelerator pedal opening ratio and a change of the vehicle speed when the information provided from the car navigation unit indicates that the vehicle travels in a suburb, and the control means instructs the transmission operation instruction display unit to display the instruction for the transmission operation. According to the transmission operation instruction device of the present invention, the control means judges the driver's intent in a suburb, and it is further possible to instruct the transmission operation instruction display unit to display the instruction for the transmission operation by selecting one of the shift point line which firstly considers a fuel consumption efficiency and the shift point line which firstly considers a driving efficiency.

In the transmission operation instruction device as another aspect of the present invention, the control means instructs the transmission operation instruction display unit to display the instruction for the transmission operation by selecting one of the shift point line which firstly considers a fuel consumption efficiency and the shift point line which firstly considers a driving efficiency based on a driver's switching operation. According to the embodiment as defined in claim 4, it is possible to perform the instruction for the transmission operation by selecting one of the shift point lines according to the driver's operation.

In the transmission operation instruction device as another aspect of the present invention, the control means calculates an estimated vehicle speed based on a distance to the turning point of a curve or an intersection based on the information provided from the car navigation unit and the acceleration speed of the vehicle, calculates a target vehicle speed at which the driver easily drives own vehicle to turn on a curve or an intersection based on a corner angle at the turning point provided from the car navigation unit. The control means then instructs the transmission operation instruction display unit to display the instruction for the transmission operation to a low gear position when judging a necessity of further decreasing a current vehicle speed based on a comparison result between the target vehicle speed and the estimated vehicle speed. For example, there is a case where a driver's foot braking operation cannot overtake a curve or an intersection after the driver recognizes the presence of a turning point or a turning angle of the curve or the intersection. The transmission operation instruction device according to the present invention instructs the driver to shift the current gear position to a lower gear position (performing down-shift operation) in advance, and the driver thereby operates the engine braking in order to decrease the vehicle speed. Thereby, the driver can smoothly drive the vehicle to turn the curve or the intersection.

In the transmission operation instruction device as another aspect of the present invention, the transmission operation instruction display unit displays the instruction for the transmission operation in different display manners according to the shift point line which is selected from the shift point line firstly considering the fuel consumption efficiency and the shift point line firstly considering the easy acceleration/deceleration. By taking the different display manner corresponding to each shift point line, it is thereby possible to clearly indicate or inform the selected shift point line to the driver of the vehicle.

In the transmission operation instruction device as another aspect of the present invention, the transmission operation instruction display unit displays the instruction for the transmission operation in highlight when the control means outputs the instruction for the transmission operation in gear shift of not less than two. It is thereby possible to clearly indicate or inform to the driver that the instruction indicates the transmission operation of performing the gear shift of not less than two.

### BRIEF DESCRIPTION OF THE DRAWINGS

A preferred, non-limiting embodiment of the present invention will be described by way of example with reference to the accompanying drawings, in which:
FIG.1 is a view showing an entire configuration of a transmission operation instruction device according to an embodiment of the present invention;
FIG. 2 is a flow chart showing an entire process of the transmission operation instruction device according to the embodiment shown in FIG. 1;
FIG. 3 is a flow chart showing a drive mode judgment process of the transmission operation instruction device shown in FIG. 1 ;
FIG. 4 is a flow chart showing a traffic congestion judgment process of the transmission operation instruction device shown in FIG. 1;
FIG. 5 is a flow chart showing a deceleration assistance process of the transmission operation instruction device shown in FIG. 1;
FIG. 6A shows a timing chart to be used for calculating an estimated turning speed of a vehicle;
FIG. 6B shows a table to be used for calculating a target vehicle speed;
FIGS. 7A to 7C are characteristic views showing shift operation under various shift point lines;
FIG. 8A is a timing chart showing a relationship between an accelerator pedal opening ratio and time;
FIG. 8B is a timing chart showing a relationship between a vehicle speed and time;
FIG. 9A is a timing chart showing a relationship between on/off operation of a brake pedal and time;
FIG. 9B is a timing chart showing a relationship between an accelerator pedal opening ratio and time;
FIG. 9C is a timing chart showing a relationship between a vehicle speed and time; and
FIG. 10 is a characteristic view showing shift operations under various shift point lines.

### DETAILED DESCRIPTION OF THE PREFERRED EMBODIMENTS

Hereinafter, various embodiments of the present invention will be described with reference to the accompanying drawings. In the following description of the various embodiments, like reference characters or numerals designate like or equivalent component parts throughout the several diagrams.

A description will be given of the transmission operation instruction device according to an embodiment of the present invention with reference to figures.

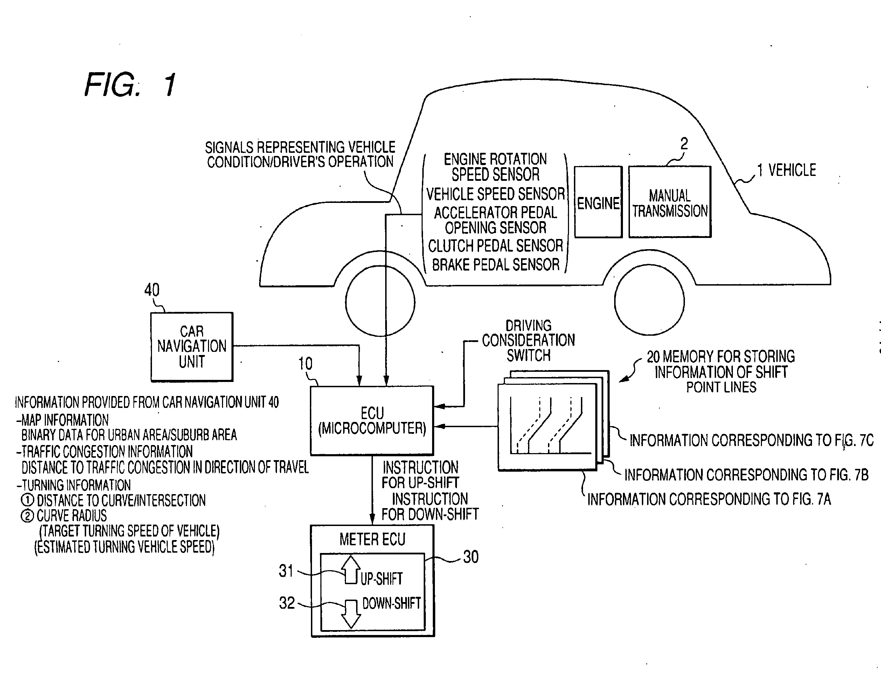

FIG.1 is a view showing an entire configuration of the transmission operation instruction device according to the embodiment. As shown in FIG. 1, the vehicle 1 is equipped with a manual transmission 2 and the transmission operation instruction device according to the embodiment. The transmission operation instruction device mounted on the vehicle 1 has a microcomputer 10, a memory 20, and a shift display unit (as a lamp) 30 for displaying various instructions for the transmission operation to the driver of the vehicle 1. This shift display unit 30 is arranged as one type of instrument panel meter. The transmission operation instruction device instructs the shift display unit 30 to display the instruction of the transmission operation for the manual transmission 2. Through the shift display unit 30, the driver gets and recognizes the instruction to operate the manual transmission 2. The microcomputer 10 inputs various types of signals regarding vehicle conditions and the driver's operation. Concretely, the microcomputer 10 inputs an engine rotation speed signal transferred from an engine rotation speed sensor, a vehicle speed signal transferred from a vehicle speed sensor, an accelerator pedal opening signal (or a throttle opening signal) transferred from an accelerator pedal opening sensor, a clutch pedal operation signal transferred from a clutch pedal sensor, and a break pedal operation signal transferred from a brake pedal sensor.

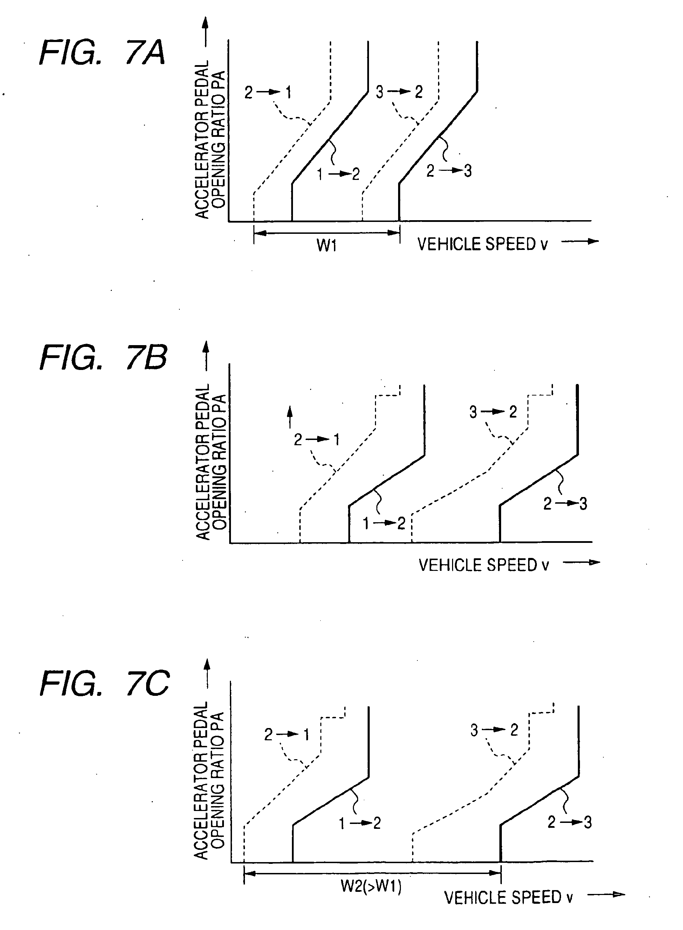

The memory 20 stores information regarding various types of shift point lines. In a concrete example, the memory 20 stores a map of three types of shift point lines shown in FIG. 7A, FIG. 7B, and FIG. 7C. The microcomputer 10 inputs information regarding the map of the shift point lines stored in the memory 20, generates, and provided the instruction for the transmission operation to the driver of the vehicle based on the shift point lines. That is, the microcomputer 10 as the transmission operation instruction device of the embodiment calculates an optimum gear position corresponding to the vehicle speed and the accelerator pedal opening ratio based on the shift point line. The microcomputer 10 then judges whether or not the calculated optimum gear position is different from a current gear position of the manual transmission 2. When the judgment result indicates that the calculated optimum gear position is different from a current gear position of the manual transmission 2, the microcomputer 10 instructs the shift display unit 30 to display the instruction for the transmission operation. The driver of the vehicle recognizes the instruction displayed on the shift display unit 30. It is also acceptable to use the throttle opening ratio as the parameter in the calculation instead of the accelerator pedal opening ratio. Further, it is acceptable to calculate the actual gear position of the manual transmission 2 based on an engine rotation number (as a rotation speed) and the vehicle speed, or also acceptable to detect the actual gear position thereof by using a sensor and the like for detecting the actual position of a shift lever.

Still further, it is possible to obtain the optimum gear position based on various simple manners, not always use of the information regarding the map of the shift point line.

The shift display unit 30 is equipped with a display unit 31 for up-shift operation (or an up-shift display unit 31) and a display unit 32 for down-shift operation (or a down-shift display unit 32). The microcomputer 10 provides to the shift display unit 30 various instructions regarding the up-shift operation and down-shift operation. On receiving the instructions transferred from the microcomputer 10, the up-shift display unit 31 and the down-shift display unit 32 are turned on and turned off.

The microcomputer 10 is electrically connected to a car navigation unit 40 for use in a car navigation system. The microcomputer 10 inputs navigation information transferred from the car navigation unit 40, where the navigation information includes map information, traffic congestion (or a traffic jam) information and turn information. The map information is composed of binary signals of urban area information/suburb information (judgment information). The traffic congestion information is composed of distance information in the direction of travel of own vehicle from a current vehicle position on the road to the point where the traffic congestion occurs. The turn information is composed of distance information and radius information of a curve, where the distance information is measured in the direction of travel of own vehicle from the current position of the vehicle to the curve or an intersection. A target vehicle speed on a curve and an estimated turning vehicle speed on the curve are obtained by using both of the distance information and the radius information in the turn information as described later in detail.

In the transmission operation instruction device of the embodiment, the microcomputer 10 acts as an optimum gear position calculation means and a judgment means, and a control means as defined in claims according to the present invention.

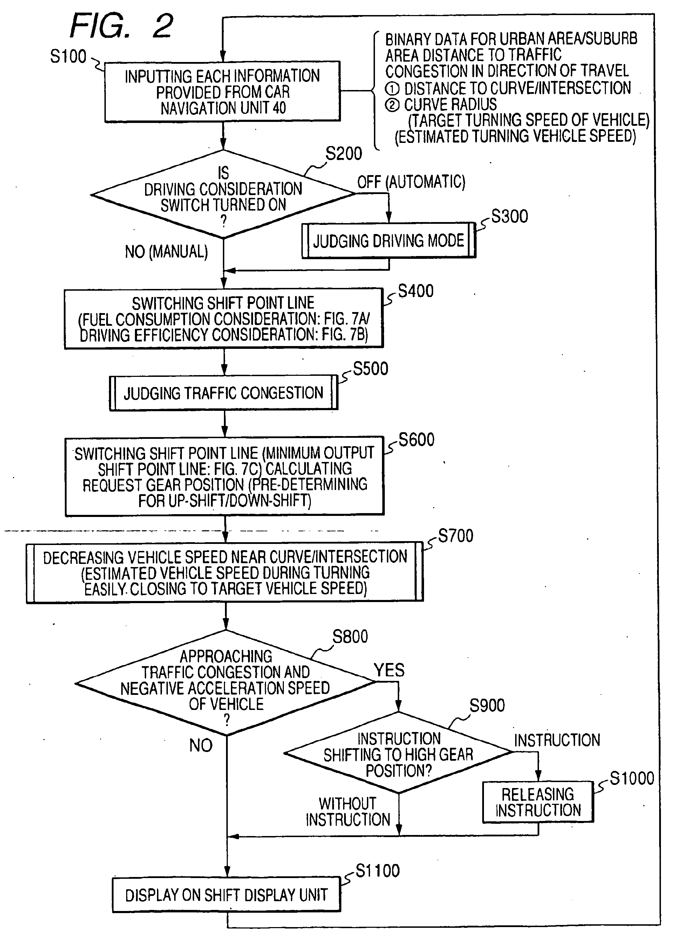

Next, a description will now be given of the operation of the transmission operation instruction device with reference to FIG. 2.

FIG. 2 is a flow chart showing an entire process of the transmission operation instruction device according to the embodiment shown in FIG. 1. In FIG. 2, the microcomputer 10 always inputs various types of information from the car navigation unit 40 such as the map information, information of indication a current position of own vehicle (current position information in short), and the traffic congestion information from the car navigation unit 40 (in step S100). In more detail, the information is mainly composed of the binary signals of urban area information/suburb information, the distance information, in the direction of travel of own vehicle, counted from the current vehicle position to the point of the traffic congestion, and the distance information measured in the direction of travel of own vehicle from the current position of the vehicle to the curve or an intersection, and curve radius information.

In step S200, the microcomputer 10 judges whether or not a drive consideration switch is turned on or turned off. In the configuration of the embodiment, the driver turns on this drive consideration switch mounted on the vehicle by manual. When the judgment result of the microcomputer 10 indicates that the drive consideration switch is turned off and an automatic mode is turned on instead, the microcomputer 10 performs the judgment of the driving mode in step S300.

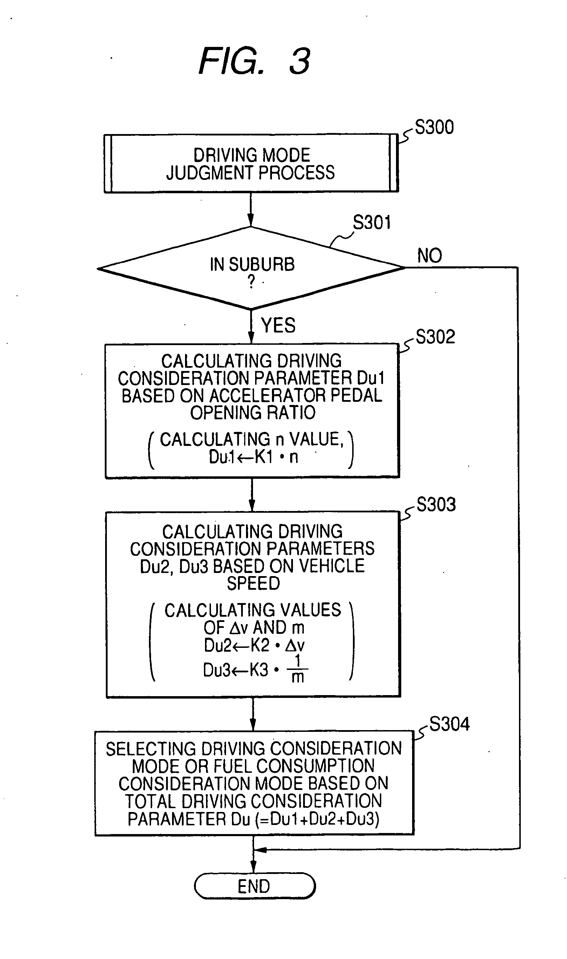

FIG. 3 shows a detailed process regarding step S300. FIG. 3 is a flow chart showing the driving mode judgment process performed by the microcomputer 10 in the transmission operation instruction device according to the embodiment shown in FIG. 1. The detailed process in step S300 will be explained later.

At step S400 shown in FIG. 2, the microcomputer 10 selects a shift point line. In a concrete example, the microcomputer 10 selects one of the shift point lines shown in FIG. 7A and FIG. 7B. FIGS. 7A to 7C are characteristic views showing various types of the shift point lines to be selected by the microcomputer 10 in the transmission operation instruction device of the embodiment of the present invention.

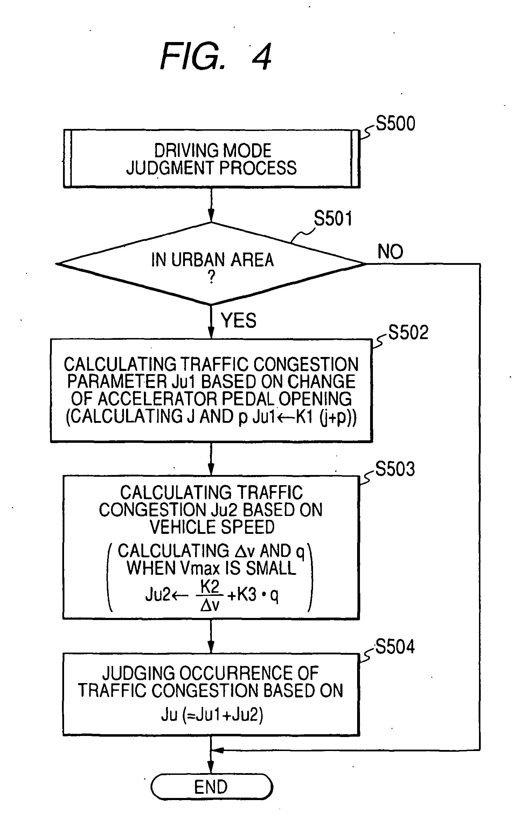

In step S500 of FIG. 2, the microcomputer 10 judges whether or not traffic congestion occurs. FIG. 4 shows a detailed process regarding step S500. FIG. 4 is a flow chart showing the traffic congestion judgment process of the microcomputer 10 forming the transmission operation instruction device shown in FIG. 1. The detailed process in step S500 will be explained later.

In FIG. 2, the microcomputer 10 switches the shift point line in step S600 and calculates a request gear position. That is, the microcomputer 10 calculates an optimum gear position corresponding to a vehicle speed and an accelerator pedal opening ratio (or a throttle opening ratio) based on the shift point line switched. The microcomputer then judges whether or not the calculated optimum gear position is different from the current gear position of the manual transmission 2. When the judgment result indicates that both gear positions are different to each other, the microcomputer 10 determines to instruct the shift display unit 30 to display the instruction for the transmission operation. When receiving the instruction from the microcomputer 10, the shift display unit displays the instruction for the transmission operation in order to perform the transmission operation by the driver of the vehicle.

As shown in FIG. 7A, FIG. 7B, and FIG. 7C, three types of the shift point lines have been prepared. FIG. 7A shows the shift point lines and each shift point line firstly considers the fuel consumption efficiency of the vehicle 1 by which a rotation speed of an internal combustion engine of the vehicle 1 is set with optimum fuel consumption efficiency.

FIG. 7B shows the shift point lines and each shift point line firstly considers the driving efficiency of the vehicle so as to increase the engine rotation speed and thereby to easily select a low gear position (that is, this mode tends to easily perform acceleration/deceleration of the vehicle speed). FIG. 7C shows the shift point lines and each shift point line where the microcomputer 10 does not tend to generate and output the instruction for the transmission operation, namely, where the current gear position set by the driver is wide. That is, in the comparison between the shift point lines shown in FIG. 7A and FIG. 7C, the width W2 of the gear position area of the shift point lines shown in FIG. 7C is greater than the width W1 of the gear position area of the shift point lines shown in FIG. 7A (W2 > W1).

Although FIG. 7A to FIG. 7C show three gear positions, it is possible to have the gear positions of an optional number other than three.

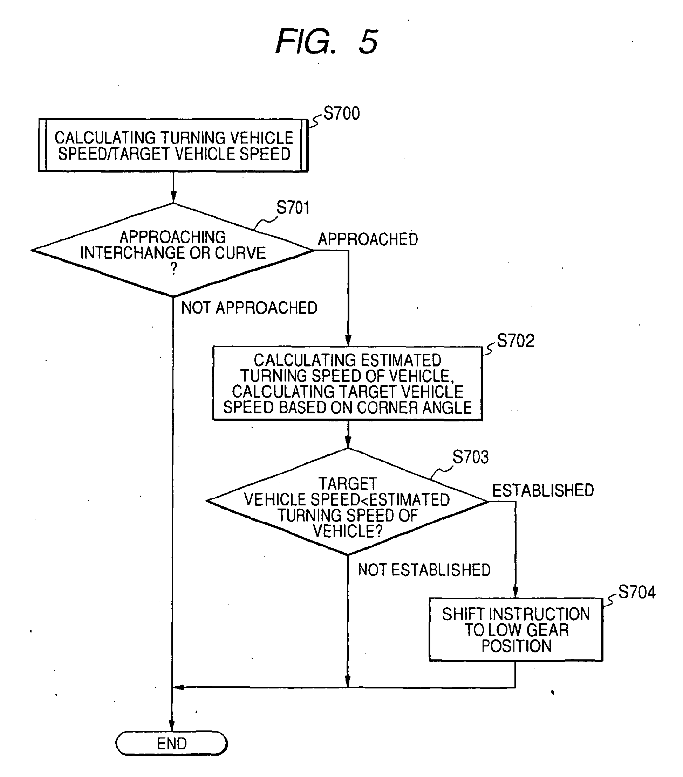

The microcomputer 10 performs a deceleration assistance process in step S700 shown in FIG. 2. FIG. 5 is a flow chart showing the deceleration assistance process for the vehicle near a curve or an intersection. A detailed explanation of the process in step S700 will be explained later.

In FIG. 2, the microcomputer 10 estimates that the vehicle just reaches the tail end of a train of vehicles in a traffic jam on detecting the decrease of the accelerator pedal opening ration based on the distance to the traffic congestion in the direction of travel of own vehicle 1 provided from the car navigation unit 40. On estimating this state, the microcomputer 10 limits to display the instruction for the transmission operation of a higher gear position (as the instruction of the up-shift operation) on the shift display unit 30 by releasing or halting the display of this instruction in step S1000 until the time of reaching the vehicle acceleration speed of a positive value even if there is the instruction to shift to the current gear position to a higher gear position in step S900. That is, the microcomputer receives the distance information which indicates the distance between the current position of the vehicle 1 to the position of the traffic congestion based on the map information, the current position information of the vehicle 1, the traffic congestion information provided from the car navigation unit 40 in step S100. When the vehicle just reaches the tail end of a train of vehicles in the traffic congestion and the accelerator pedal opening ration is decreased, the microcomputer 10 estimates that the vehicle 1 reaches the tail end of a train of vehicles in the traffic congestion, and then limits the display of the instruction for the transmission operation until the vehicle acceleration speed becomes a positive value.

As described above, the microcomputer forming the transmission operation instruction device of the embodiment estimates that the vehicle 1 almost reaches the tail end of a train of vehicles in the traffic congestion by detecting the decrease of the accelerator pedal opening ratio based on the distance information to the traffic congestion in the direction of travel provided from the car navigation unit 40. The microcomputer 10 then limits or halts that the shift display unit 30 displays the instruction for the transmission operation on the shift display unit. In order to enhance the fuel economy of the vehicle as has been explained with reference to FIG. 10, the driver tends to instruct to shift the current gear position to a higher gear position side (or to output the up-shift instruction) when the accelerator pedal opening ratio is decreased. However, because the driver generally intends to decrease the vehicle speed upon encountering the traffic congestion in the direction of travel of the vehicle 1, and because the instruction (as up-shift instruction) of shifting the current gear position to a higher gear position having a weak engine braking introduces the driver's confusion, it is possible to prevent the occurrence of the driver's confusion by halting the execution of the transmission operation to a higher gear position (up-shift side). Thus, the transmission operation instruction device of the embodiment can provide the instruction for the transmission operation mostly suitable for the road condition and the driver's intent.

In case of the above embodiment, although the microcomputer 10 detects the approach of the traffic congestion on the road based on the distance from the current position of the vehicle 1 to the traffic congestion, it is acceptable to detect the approach of the traffic congestion based on a time length until the traffic congestion in the direction of travel of the vehicle 1. That is, the microcomputer 10 as the transmission operation instruction device of the embodiment can detect the approach of the traffic congestion based on the traffic congestion information in the direction of travel of the vehicle 1 provided from the car navigation unit 40.

On the other hand, the microcomputer 10 judges whether or not the vehicle 1 travels or is in an urban area based on the map information in step S501 shown in FIG. 4 which shows the detailed process of step S500 shown in FIG. 2. When the judgment result indicates that the vehicle 1 is traveling in the urban area, the operation flow goes to step S502.

In step S502, the microcomputer 10 calculates a congestion ratio Ju based on the change of the accelerator pedal opening ratio.

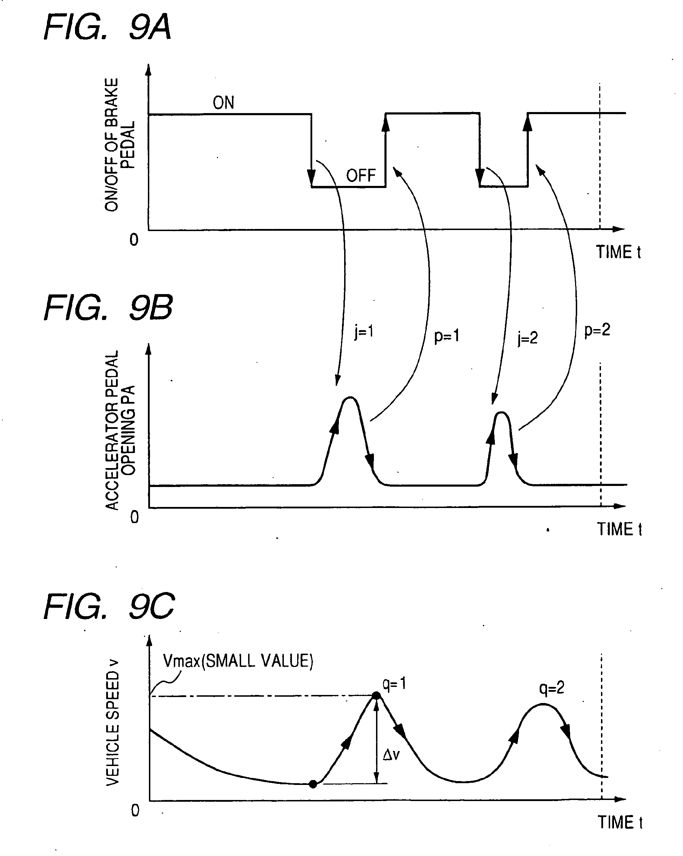

The detailed explanation of this process will now be explained with reference to FIG. 9A, FIG. 9B, and FIG. 9C.

FIG. 9A is a timing chart showing a relationship between on/off of a brake pedal of the vehicle 1 and time. FIG. 9B is a timing chart showing a relationship between an accelerator pedal opening ratio and time. FIG. 9C is a timing chart showing a relationship between a vehicle speed and time.

In FIG. 9A to FIG. 9C, the microcomputer 10 calculates the frequency number "j" of the changes from on-operation of the brake pedal to off-operation of the brake pedal and, in addition to this, from a small value to a large value in the accelerator pedal opening ratio during a predetermined time interval. The microcomputer 10 calculates the frequency number "p" of the changes from the small value to the large value in the accelerator pedal opening ratio, and in addition to this, from the off-operation of the brake pedal to the on-operation of the brake pedal during the predetermined time interval. The microcomputer 10 sums both of the frequency numbers "j" + "p", and then multiplies the sum "j" + "p" by a weight coefficient K1. the microcomputer 10 finally calculates the congestion ratio Ju1 (Ju1 = K1 (j + p)). Based on the congestion ratio Ju1, the microcomputer 10 can judge whether or not the driver requests the acceleration/deceleration of the vehicle speed at high frequency.

In step S503 shown in FIG. 4, the microcomputer 10 calculates the congestion ratio Ju2 based on the vehicle speed.

The explanation of the process in step S503 will now be explained in detail with reference to FIG. 9A to FIG. 9C.

In FIG. 9A, FIG. 9B, and FIG. 9C, the microcomputer 10 calculates a change amount Δ v of the vehicle speed when the maximum value "vmax" of the vehicle speed is small during the predetermined time length. The change amount Δ v of the vehicle speed indicates that the vehicle 1 can not drive at a high speed by the occurrence of the traffic congestion.

In addition, the microcomputer 10 counts the reversed number "q" of the frequency of increasing/decreasing the vehicle speed. A large value of the reversed number "q" indicates that the driver intends to maintain a constant vehicle speed. The microcomputer 10 calculates the congestion ratio Ju2 based on the change amount Δv of the vehicle speed and the reversed number "q" and weight parameters K2 and K3.

The microcomputer 10 sums the congestion ratios Ju1 and Ju2 in step S504 shown in FIG. 4. The microcomputer 10 judges whether or not the degree of the traffic congestion based on the total congestion ratio Ju (Ju = Ju1 + Ju2). In more detail, a larger congestion ratio Ju indicates the occurrence of a large amount of the traffic congestion.

When the congestion ratio Ju is larger than a predetermined value, the microcomputer 10 switches the current shift point line to another shift point line shown in FIG. 7C with the less number of generating the instruction for the transmission operation (step S600 shown in FIG. 2).

That is, the microcomputer 10 selects the shift point line, as shown in FIG. 7C, having a larger area of the gear position than that of the current gear position in the shift point line set by the driver of the vehicle 1.

In step S600 shown in FIG. 2, the microcomputer 10 further calculates the requests gear position based on the switched shift point line, and determines a virtual up-shift/down-shift.

As described above in detail, the microcomputer 10 estimates the congestion ratio on the road (traffic congestion) based on the information provided from the car navigation unit 40 indicating that the vehicle 1 is traveling in the urban area, the information of the driver's braking-operation, and the increase/decrease of the vehicle speed. The microcomputer 10 further switches the current shift point line to the optimum shift point line having a low frequency of the transmission operation, and instructs the shift display unit 30 to display the instruction for the transmission operation.

For example, in an urban area where many vehicles travel and the vehicle speed of each vehicle is frequently changed, the driver of the vehicle 1 must perform many transmission operations. The many transmission operations can distress the driver, increasing his workload. On the contrary, the transmission operation instruction device of the embodiment estimates the traffic congestion ratio and then limits the number of instructions for the transmission operation to be provided to the shift display unit 30. In other words, the microcomputer 10 provides fewer instructions for the transmission operation in order to avoid the driver's workload. It is thereby possible to output the instruction for the transmission operation to the shift display unit 30 according to the traffic condition and the driver's intent.

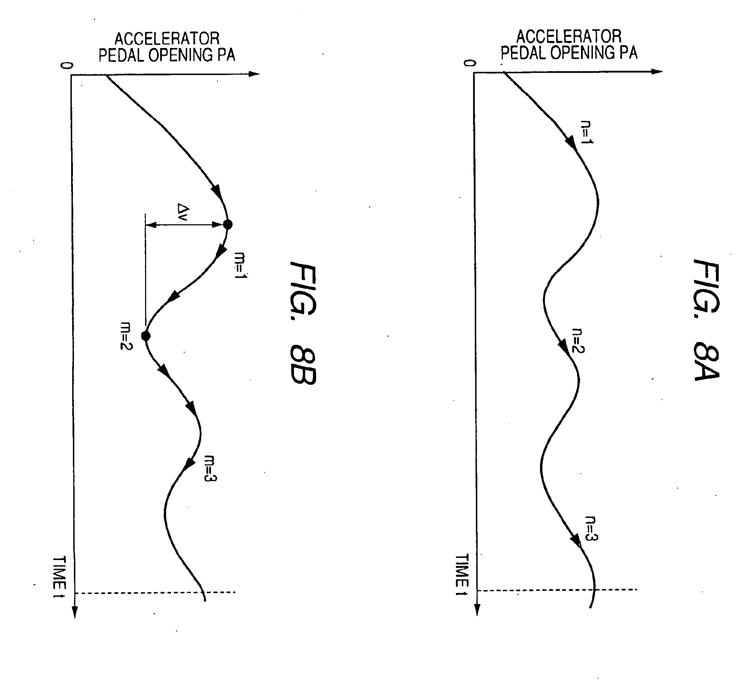

In step S300 shown in FIG. 2, the microcomputer 10 judges whether or not the current position of the vehicle 1 is in a suburb area based on the map information provided from the car navigation unit 40. The judgment result indicates that the current position of the vehicle 1 is in a suburb area, the microcomputer 10 calculates a driving consideration parameter Du1 based on an accelerator pedal opening area in step S302. This process will now be explained in detail with reference to FIG. 8.

In FIG. 8, the microcomputer 10 counts the number "n" of change of the accelerator pedal opening from a small opening to a large opening during a predetermined interval of time. The microcomputer 10 multiplies the counted number "n" by a weight parameter k1 in order to calculate the driving consideration parameter Du1. It is thereby possible for the vehicle 1 to enter the driving consideration mode by the operation of the accelerator pedal by the driver. By the way, the microcomputer 10 does not count the change of the accelerator pedal opening ratio from a large value to a small value because such a change often occurs while the vehicle speed is changed.

In step S303 shown in FIG. 3, the microcomputer 10 calculates both of the driving consideration parameters Du2 and Du3. This calculation will be explained in detail with reference to FIG. 8A and FIG. 8B.

FIG. 8A is a timing chart showing a relationship between the accelerator pedal opening ratio "PA" and time. FIG. 8B is a timing chart showing a relationship between the vehicle speed "v" and time.

The microcomputer 10 calculates a difference (as a change amount Δv) between the maximum value and the minimum value of the vehicle speed during a predetermined time period. The microcomputer 10 further counts the reversed number "m" of the changes in increasing/decreasing of the vehicle speed.

A large value of the difference (as the change amount Δ v) between the maximum value and the minimum value of the vehicle speed in a short length of time indicates that the current driving mode is the driving consideration mode which firstly considers the driving efficiency.

A large value of the reversed number "m" of the changes in increasing/decreasing of the vehicle speed indicates that the current driving mode is the fuel consumption consideration mode which firstly considers the fuel consumption efficiency and the driver intends to keep a constant vehicle speed.

The microcomputer 10 uses the product (=k2 · Δv) of the weight parameter k2 and the change amount Δ v as the driving consideration parameter Du2, and uses the product (=k3/m) of the weight parameter k3 and the value 1/m as the driving consideration parameter Du3.

In step S304 shown in FIG. 3, the microcomputer 10 sums up the driving consideration parameters Du1, Du2, and Du3. The microcomputer 10 uses the summation D= Du1 + Du2 + Du3 as a total driving consideration parameter. The microcomputer 10 selects one of the shift point lines as shown in FIG. 7A and FIG. 7B based on the total driving consideration parameter Du, where FIG. 7A shows the shift point lines under the fuel consumption consideration mode, and FIG. 7B shows the shift point lines under the driving consideration mode.

When the total driving consideration parameter Du is larger than the predetermined value, the microcomputer 10 selects the shift point line shown in FIG. 7B which firstly considers the driving efficiency.

For example, the transmission operation instruction device of the embodiment estimates that many vehicles smoothly drive on the road when the vehicle speed is stable, namely, the vehicle speed takes a constant value in a suburb under the accelerator pedal opening ratio of a small value. In this case, the microcomputer 10 switches the current shift point line to another shift point line which firstly considers the fuel consumption efficiency.

The transmission operation instruction device of the embodiment estimates that many vehicles smoothly drive on the road when the vehicle speed is stable, namely, the vehicle speed takes a constant value in a suburb under the accelerator pedal opening ratio of a small value. In this case, the microcomputer 10 as the transmission operation instruction device switches the current shift point line to another shift point line which firstly considers the fuel consumption efficiency.

The microcomputer 10 as the transmission operation instruction device switches the current shift point line to another shift point line under the driving efficiency consideration mode which firstly considers the driving efficiency when the change of the accelerator pedal opening ratio is a large value so that the driver smoothly performs a rapid acceleration/deceleration operation according to the change of the vehicle speed.

As described above in detail, when the vehicle 1 travels in a suburb based on the information provided from the car navigation unit 40, the microcomputer 10 as the transmission operation instruction device of the embodiment selects one of the shift point lines for use in the fuel consumption consideration mode and the driving efficiency consideration mode based on the change of the accelerator pedal opening ratio "PA" and the change of the vehicle speed "v", and instructs the shift display unit 30 to display the instruction for the optimum transmission operation.

It is thereby possible for the transmission operation instruction device of the embodiment to judge the driver's intent in a suburb and to instruct the shift display unit 30 to display the instruction for the optimum transmission operation. In more detail, because the transmission operation instruction device generates and provides in principle the instruction of enhancing the fuel consumption efficiency of the vehicle 1, a high speed driving of the vehicle 1 increases the numbers of the instructions for the transmission operation. When the driver wishes to drive the vehicle 1 at a high speed, it is necessary to change the output timing of the instruction for the transmission operation and to display the instruction on the shift display unit 30. According to the embodiment of the present invention, the transmission operation instruction device is capable of automatically judging the driver's intent and of changing the timing of providing the instruction for the transmission operation to the driver. As a result, the transmission operation instruction device of the embodiment can provide the instruction for the transmission operation at the optimum timing corresponding to the road condition, the traffic condition, and the driver's intent.

In step S200 shown in FIG. 2, the microcomputer 10 judges whether the driver selects the fuel consumption consideration mode or the driving efficiency mode based on the driver's operation of manually switching the drive consideration switch, and the microcomputer 10 then switches the current shift point line to the optimum shift point line. Thus, the transmission operation instruction device of the embodiment does not automatically perform the transmission operation. One of the shift point lines for the fuel consumption consideration mode and the driving efficiency mode is selected based on the driver's manual operation of the drive consideration switch, and the instruction for the transmission operation based on the selected shift point line is displayed on the shift display unit 30. This enables the driver of the vehicle 1 to change the timing of displaying the instruction for the transmission operation when the driver intends to drive the vehicle 1 at a high speed. Because the driver of the vehicle 1 directly and manually operates the drive consideration switch in step S200 shown in FIG. 2, it is possible for the driver to certainly change such timing when compared with the case of performing the completely automatic operation. This can display the instruction form the transmission operation on the shift display unit 30 based on the driver's intent.

In step S700 shown in FIG. 2 and in step S701 shown in FIG. 5, when the microcomputer 10 detects that the vehicle 1 approaches a corner angle of an intersection or a curve based on the information provided from the car navigation unit 40, the operation flow goes to step S702.

In step S702, the microcomputer 10 estimates a turning speed of the vehicle 1 on the curve or an intersection or a curve based on the distance from the current position of the vehicle 1 to the intersection or the curve and an acceleration speed of the vehicle 1.

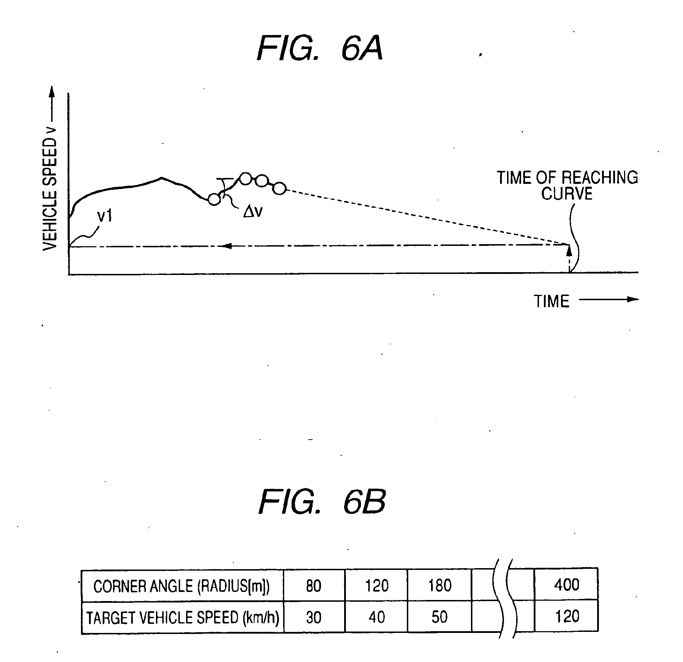

FIG. 6A shows a timing chart to be used for calculating the estimated turning speed of the vehicle 1. FIG. 6B shows a table to be used for calculating a target vehicle speed (km/h). In more detail, as shown in FIG. 6A, the microcomputer 10 estimates the vehicle speed v1 at the target point based on the change of the vehicle speed. That is, because the distance to the turning point (namely, to the curve or the intersection) is obtained based on the information provided from the car navigation unit 40, the microcomputer 10 estimates the vehicle speed at the turning point based on the change amount of the vehicle speed and the obtained distance.

In step S702 shown in FIG. 5, the microcomputer 10 calculates a target vehicle speed at which the vehicle 1 smoothly turns the curve or the intersection based on the information provided from the car navigation unit 40. In more detail, as shown in FIG. 6B, the table of the relationship between the corner angle and the vehicle speed has been prepared, for example, in the memory 20 in the transmission operation instruction device of the embodiment.

The microcomputer 10 obtains the target vehicle speed based on the relationship in the table shown in FIG. 6B. That is, the corner angle (namely, corresponding to the turning angle of the vehicle 1) of the curve or the intersection can be obtained based on the information provided from the car navigation unit 40. The microcomputer 10 calculates the target vehicle speed based on the corner angle (corresponding to a corner radius) of the curve or the intersection using the relationship in the table shown in FIG. 6B.

The microcomputer 10 compares the target vehicle speed with the estimated turning speed of the vehicle 1 in step S703 shown in FIG. 5.

When the estimated turning speed of the vehicle 1 is larger than the target vehicle speed and the microcomputer 10 determines the necessity of further decreasing the vehicle speed, the microcomputer 10 instructs the shift display unit 30 to display the instruction for the transmission operation to a lower gear position.

The transmission operation instruction device of the embodiment obtains the estimated vehicle speed at the turning point such as the curve and the intersection based on the acceleration speed of the vehicle 1 and the distance to the turning point of the curve or the intersection which is obtained based on the information provided from the car navigation unit 40.

The microcomputer 10 further calculates the target vehicle speed (as the upper limit value) based on the corner angle regarding the turning point (the curve or the intersection) provided from the car navigation unit 40, and compares the target vehicle speed with the estimated vehicle speed. The comparison result indicates the necessity of further decreasing the vehicle speed, the microcomputer 10 instructs the shift display unit 30 to display the instruction for the transmission operation to shift to a lower gear position.

For example, there is a case where the driver's foot braking operation cannot overtake the curve or the intersection after the driver recognizes the presence of a turning point or a turning angle of the curve or the intersection. The transmission operation instruction device of the embodiment instructs the driver to shift the current gear position to a lower gear position (down-shift operation) in advance, and the driver thereby operates the engine braking in order to decrease the vehicle speed. Thereby, the driver can smoothly drive the vehicle 1 to turn on the curve or the intersection. In addition, because the vehicle 1 drives under a fuel cut mode, the fuel consumption efficiency is increased. The transmission operation instruction device of the embodiment can provide the instruction for the transmission operation suitable for the driver's intend and the road and traffic conditions.

Further, the transmission operation instruction device of the embodiment instructs the shift display unit 30 to display the instruction by different display manners according to the types of the instruction for the transmission operation (one type uses the shift point line which firstly considers the fuel consumption efficiency and another type uses the shift point line which firstly considers the driving efficiency). For example, the shift display unit 30 is equipped with plural LEDs of different colors. The different important levels regarding the instructions for the transmission operation are assigned to the different colors of the LEDs. It is thereby possible to display both cases by the different display modes, where one case uses the shift point line which firstly considers the fuel consumption efficiency and another case uses the shift point line which firstly considers the driving efficiency. It is further possible for the driver to easily notice the importance level of the instructions for the transmission operation when compared with a related-art manner using a single color display mode, and the single color display mode is assigned to both cases, namely, one case uses a shift point line which firstly considers the fuel consumption efficiency and the other case uses a shift point line which firstly considers the driving efficiency.

In more detail, the transmission operation instruction device of the embodiment can inform the warning according to its importance level by using the different display manner which switches the display color corresponding to the importance level of the warning even if the driver disregards or ignores the instruction for the transmission operation displayed on the shift display unit 30. The display manner of the embodiment can provide the driver with easy understanding of the instruction for the transmission operation when compared with a conventional case using the simple display mode such as only lighting on/lighting off, not using the different-color displaying manner. Thus, the embodiment of the present invention can avoid the conventional drawback regarding the display mode where the driver does not always recognize the importance degree of warning of the instruction for the transmission operation when the driver disregards the instruction displayed under the simple display mode.

The transmission operation instruction device of the embodiment instructs the shift display unit (or a lamp) 30 to display the instruction for the transmission operation with highlighting when the current gear position is shifted (in the gear shift of not less than two) to a higher gear position (or low gear position). For example, the shift display unit 30 is equipped with the plural LEDs, the transmission operation instruction device turns on one LED when instructing the shift display unit 30 to display the instruction for the transmission operation of one gear position, and turns on plural LEDs when instructing to display the instruction form the transmission operation of not less than two gear positions. That is, the transmission operation instruction device of the embodiment turns on the shift display unit 30 in an enhancement display mode when providing the instruction for the transmission operation of shifting the current gear position to two or more gear positions. This informs the driver of the vehicle 1 that the transmission operation instruction device now provides the instruction for the transmission operation of not less than two gear positions. In more detail, when instructing to perform the shift operation of not less than two gear positions, the transmission control instruction device highlights the shift display unit 30 by plural LEDs because the transmission operation instruction device judges that the current gear position selected by the driver of the vehicle 1 is apparently a poor gear position.

The transmission operation instruction device of the embodiment according to the present invention performs the following control operations (i) to (v).
(i) In step S800, S900, and S1000 shown in FIG. 2, the transmission operation instruction device estimates that the vehicle 1 approaches the tail end of a train of vehicles in a traffic congestion in the direction of travel of the vehicle 1 based on the traffic congestion information (for example, the distance information) when the vehicle 1 is traveling in the area near the traffic congestion and the accelerator pedal opening ratio is decreased. Based on the estimation result, the transmission operation instruction device prohibits the shift display unit 30 from displaying the instruction for the transmission operation to a higher gear position side until the acceleration speed of the vehicle 1 becomes a positive value.
(ii) In step S500 and S600 shown in FIG. 2, the transmission operation instruction device estimates occurrence of the traffic congestion based on the change of the accelerator pedal opening ratio, the driver's braking operation, and the increase/decrease of the vehicle speed when the vehicle 1 is traveling in an urban area. When the estimation result indicates the occurrence of the traffic congestion, the instruction of the transmission operation is displayed on the shift display unit 30 by switching the current shift point line to another shift point line having less number of generating the instructions for the transmission operation when the traffic congestion occurs.
(iii) In step S300 and S400 shown in FIG. 2, the instruction of the transmission operation is displayed on the shift display unit 30 by selecting one of the shift point line which firstly considers the fuel consumption efficiency and the shift point line which firstly considers the driving efficiency based on the change of the accelerator pedal opening ration and the change of the vehicle speed when the vehicle 1 travels in a suburb.
(iv) In step S200 and S400 shown in FIG. 2, the instruction of the transmission operation is displayed on the shift display unit 30 by selecting one of the shift point line which firstly considers the fuel consumption efficiency and the shift point line which firstly considers the driving efficiency based on the manual switching operation by the driver of the vehicle 1.
(v) In step S700 shown in FIG. 7, the estimated vehicle speed on a turning point is calculated based on the distance to the turning point and the acceleration speed of the vehicle 1 and calculates the target vehicle speed, with which the driver easily drives the vehicle 1 to turn the curve or the intersection, based on the corner angle at the turning point. The target vehicle speed is compared with the estimated vehicle speed. When the comparison result indicates the necessity of further decreasing the vehicle speed, the instruction for the transmission operation to a lower gear position is displayed on the shift display unit 30.

It is possible to independently perform each of the controls (i) to (v) described above. In the embodiment of the present invention described above, the transmission operation instruction device is applied to the vehicle equipped with the manual transmission 2. The concept of the present invention is not limited by this embodiment. It is possible to apply the transmission operation instruction device according to the present invention to a vehicle equipped with a semi-automatic transmission.

While specific embodiments of the present invention have been described in detail, it will be appreciated by those skilled in the art that various modifications and alternatives to those details could be developed in light of the overall teachings of the disclosure. Accordingly, the particular arrangements disclosed are meant to be illustrative only and not limited to the scope of the present invention which is to be given the full breadth of the following claims and all equivalent thereof.

## Claims

1. A transmission operation instruction device comprising:
a transmission operation instruction display unit (30) configured to display a transmission operation for a manual transmission (2) mounted on a vehicle (1);
optimum gear position calculation means (10) configured to calculate an optimum gear position corresponding to a vehicle speed and an accelerator pedal opening ratio or a throttle opening ratio;
judgment means (10) configured to judge whether or not the calculated optimum gear position is different from a current gear position of the manual transmission (2); and
control means (10) configured to control instruct the transmission operation instruction display unit (30) to display an instruction for the transmission operation when a judgment result of the judgment means (10) indicates that the current gear position is different from the calculated optimum gear position, and the control means (10) configured to control the display of the instruction for the transmission operation on the transmission operation instruction display unit (30) based on vehicular condition provided from various sensors mounted on the vehicle (1)
**characterized in that**
the control means (10) is further configured to control the display of the instruction for the transmission operation on the transmission operation instruction display unit (30) based on information provided from a car navigation unit (40);
wherein when the information provided form the car navigation unit (40) indicates occurrence of a traffic congestion in a direction of travel of the vehicle (1), the control means (10) estimates that the vehicle (1) just reaches a tail end of a train of vehicles in the traffic congestion when the accelerator pedal opening ratio is decreased, and the control means (10) limits the output of the instruction, which indicates the transmission operation of shifting to a high gear position, to the transmission operation instruction display unit (30) until an acceleration speed of the vehicle (1) becomes a positive value.

2. The transmission operation instruction device as claimed in claim 1,
wherein the optimum gear position calculation means (10) calculates the optimum gear position corresponding to a vehicle speed and an accelerator pedal opening ratio or a throttle opening ratio based on a shift point line, and
the control means (10) estimates occurrence of a traffic congestion in a direction of travel of the vehicle (1) based on a change of the accelerator pedal opening ratio, a driver's pedal braking, and a change of the vehicle speed when the information provided from the car navigation unit (40) indicates that the vehicle (1) travels in an urban area, and
the control means (10) switches a current shift point line to a shift point line which is small in number for generating the instruction for the transmission operation, and instructs the transmission operation instruction display unit (30) to display the instruction for the transmission operation.

3. The transmission operation instruction device as claimed in claim 1,
wherein the optimum gear position calculation means (10) calculates the optimum gear position corresponding to a vehicle speed and an accelerator pedal opening ratio or a throttle opening ratio based on a shift point line, and
the control means (10) selects one of a shift point line which firstly considers a fuel consumption efficiency and a shift point line which firstly considers easy acceleration/deceleration by selecting a low gear position based on a change of the accelerator pedal opening ratio and a change of the vehicle speed when the information provided from the car navigation unit (40) indicates that the vehicle (1) travels in a suburb, and the control means (10) instructs the transmission operation instruction display unit (30) to display the instruction for the transmission operation.

4. A transmission operation instruction device as claimed in claim 1, wherein:
the optimum gear position calculation means (10) is configured to calculate an optimum gear position corresponding to a vehicle speed and an accelerator pedal opening ratio or a throttle opening ratio based on a shift point line; and
the control means (10) is configured to select one of a shift point lines which firstly considers a fuel consumption efficiency and a shift point line which firstly considers easy acceleration/deceleration by selecting a low gear position based on a driver's switching operation, and to instruct the transmission operation instruction display unit (30) to display the instruction for the transmission operation based on the selected shift point line.

5. The transmission operation instruction device as claimed in claim 1, wherein the control means (10) calculates:
an estimated vehicle speed based on a distance to a turning point based on the information provided from the car navigation unit (40) and the acceleration speed of the vehicle (1);
calculates a target vehicle speed at which the driver of the vehicle (1) easily turn a curve or an intersection based on a corner angle at the turning point provided from the car navigation unit (40); and
instructs the transmission operation instruction display unit (30) to display the instruction for the transmission operation to a low gear position when the control means (10) judges a necessity of further decreasing a current vehicle speed based on a comparison result between the target vehicle speed and the estimated vehicle speed indicates.

6. The transmission operation instruction device as claimed in claim 3 or 4, wherein the transmission operation instruction display unit (30) displays the instruction for the transmission operation in different display manners according to selected one of the shift point line firstly considering the fuel consumption efficiency and the shift point line firstly considering the easy acceleration/deceleration.

7. The transmission operation instruction device as claimed in any one of claims 1 to 6, wherein the transmission operation instruction display unit (30) displays with highlight the instruction for the transmission operation when the control means (10) outputs the instruction for the transmission operation in gear shift of not less than two.

## Patentansprüche

1. Getriebebetriebsanweisungsvorrichtung, die aufweist:
eine Getriebebetriebsanweisungsanzeigeeinheit (30), die ausgelegt ist, einen Getriebebetrieb für ein manuelles Getriebe (2), das an einem Fahrzeug (1) montiert ist, anzuzeigen;
eine Berechnungsseinrichtung für eine optimale Gangposition (10), die ausgelegt ist, eine optimale Gangposition entsprechend einer Fahrzeuggeschwindigkeit und einem Gaspedalöffnungsverhältnis oder einem Drosselöffnungsverhältnis zu berechnen;
eine Feststellungseinrichtung (10), die ausgelegt ist, zu beurteilen, ob sich die berechnete optimale Gangposition von einer derzeitigen Gangposition des manuellen Betriebes (2) unterscheidet; und
eine Steuereinrichtung (10), die ausgelegt ist, das Anweisen der Getriebebetriebsanweisungsanzeigeeinheit (30) eine Anweisung für den Getriebebetrieb anzuzeigen, zu steuern, wenn ein Feststellungsergebnis der Feststellungseinrichtung (10) angibt, dass sich die derzeitige Gangposition von der berechneten optimalen Gangposition unterscheidet, und wobei die Steuereinrichtung (10) ausgelegt ist, das Anzeigen der Anweisung für den Getriebebetrieb auf der Getriebebetriebsanweisungsanzeigeeinheit (30) auf der Grundlage einer Fahrzeugbedingung, die von verschiedenen Sensoren, die an dem Fahrzeug (1) montiert sind, bereitgestellt wird, zu steuern,
**dadurch gekennzeichnet, dass**
die Steuereinrichtung (10) außerdem ausgelegt ist, das Anzeigen der Anweisung für den Getriebebetrieb auf der Getriebebetriebsanweisungsanzeigeeinheit (30) auf der Grundlage von Informationen, die von einer Fahrzeugnavigationseinheit (40) bereitgestellt werden, zu steuern;
wobei, wenn die Informationen, die von der Fahrzeugnavigationseinheit (40) bereitgestellt werden, das Auftreten eines Verkehrsstaues in der Richtung der Fahrt des Fahrzeugs (1) angeben, die Steuereinrichtung (10) schätzt, dass das Fahrzeug (1) soeben ein Ende eines Zuges von Fahrzeugen in dem Verkehrsstau erreicht, wenn das Gaspedalöffnungsverhältnis verringert wird, und die Steuereinrichtung (10) das Ausgeben der Anweisung, die den Getriebebetrieb des Schaltens in eine hohe Gangposition angibt, an die Getriebebetriebsanweisungsanzeige (30) begrenzt, bis eine Beschleunigung des Fahrzeugs (1) einen positiven Wert erreicht.

2. Getriebebetriebsanweisungsvorrichtung nach Anspruch 1,
wobei die Berechnungseinrichtung für eine optimale Gangposition (10) die optimale Gangposition entsprechend einer Fahrzeuggeschwindigkeit und einem Gaspedalöffnungsverhältnis oder einem Drosselöffnungsverhältnis auf der Grundlage einer Schaltpunktlinie berechnet, und
die Steuereinrichtung (10) das Auftreten eines Verkehrsstaus in der Richtung der Fahrt des Fahrzeugs (1) auf der Grundlage einer Änderung des Gaspedalöffnungsverhältnisses, einer Fahrerpedalbremsung und einer Änderung der Fahrzeuggeschwindigkeit schätzt, wenn die Informationen, die von der Fahrzeugnavigationseinheit (40) bereitgestellt werden, angeben, dass das Fahrzeug (1) in einem Stadtgebiet fährt, und
die Steuereinrichtung (10) eine derzeitige Schaltpunktlinie in eine Schaltpunktlinie ändert, die eine kleine Nummer aufweist, um die Anweisung für den Getriebebetrieb zu erzeugen, und die Getriebebetriebsanweisungsanzeigeeinheit (30) anweist, die Anweisung für den Getriebebetrieb anzuzeigen.

3. Getriebebetriebsanweisungsvorrichtung nach Anspruch 1,
wobei die Berechnungseinrichtung für eine optimale Gangposition (10) die optimale Gangposition entsprechend einer Fahrzeuggeschwindigkeit und einem Gaspedalöffnungsverhältnis oder einem Drosselöffnungsverhältnis auf der Grundlage einer Schaltpunktlinie berechnet, und
die Steuereinrichtung (10) eine Schaltpunktlinie aus einer Schaltpunktlinie, die zuerst eine Kraftstoffsverbrauchseffizienz berücksichtigt, und einer Schaltpunktlinie, die zuerst ein leichtes Beschleunigen/Verzögern berücksichtigt, durch Auswählen einer niedrigen Gangposition auf der Grundlage einer Änderung des Gaspedalöffnungsverhältnisses und einer Änderung der Fahrzeuggeschwindigkeit auswählt, wenn die Informationen, die von der Fahrzeugnavigationseinheit (40) bereitgestellt werden, angeben, dass das Fahrzeug (1) in einem Stadtrand fährt, und die Steuereinrichtung (10) die Getriebebetriebsanweisungsanzeigeeinheit (30) anweist, die Anweisung für den Getriebebetrieb anzuzeigen.

4. Getriebebetriebsanweisungsvorrichtung nach Anspruch 1, wobei
die Berechnungseinrichtung für eine optimale Gangposition (10) ausgelegt ist, eine optimale Gangposition entsprechend einer Fahrzeuggeschwindigkeit und einem Gaspedalöffnungsverhältnis oder einem Drosselöffnungsverhältnis auf der Grundlage einer Schaltpunktlinie zu berechnen; und
die Steuereinrichtung (10) ausgelegt ist, eine Schaltpunktlinie aus einer Schaltpunktlinie, die zuerst eine Kraftstoffverbrauchseffizienz berücksichtigt, und einer Schaltpunktlinie, die zuerst ein leichtes Beschleunigen/Verzögern berücksichtigt, durch Auswählen einer niedrigen Gangposition auf der Grundlage eines Schaltbetriebs eines Fahrers, auszuwählen, und die Getriebebetriebsanweisungsanzeigeeinheit (30) anzuweisen, die Anweisung für den Getriebebetrieb auf der Grundlage der ausgewählten Schaltpunktlinie anzuzeigen.

5. Getriebebetriebsanweisungsvorrichtung nach Anspruch 1,
wobei die Steuereinrichtung (10)
eine geschätzte Fahrzeuggeschwindigkeit auf der Grundlage eines Abstands zu einem Biegepunkt auf der Grundlage der Informationen, die von der Fahrzeugnavigationseinheit (40) bereitgestellt werden, und der Beschleunigung des Fahrzeugs (1) berechnet;
eine Sollfahrzeuggeschwindigkeit berechnet, bei der der Fahrer des Fahrzeugs leicht eine Kurve fährt oder an einer Kreuzung abbiegt, auf der Grundlage eines Kurvenwinkels an dem Biegepunkt, der von der Fahrzeugnavigationseinheit (40) bereitgestellt wird; und
die Getriebebetriebsanweisungsanzeigeeinheit (30) anweist, die Anweisung für den Getriebebetrieb in eine niedrige Gangposition anzuzeigen, wenn die Steuereinrichtung (10) auf der Grundlage eines Vergleichsergebnisses zwischen der Sollfahrzeuggeschwindigkeit und der geschätzten Fahrzeuggeschwindigkeit eine Notwendigkeit feststellt, eine derzeitige Fahrzeuggeschwindigkeit weiter zu verringern angibt.

6. Getriebebetriebsanweisungsvorrichtung nach Anspruch 3 oder 4, wobei die Getriebebetriebsanweisungsanzeigeeinheit (30) die Anweisung für den Getriebebetrieb auf unterschiedliche Anzeigeweisen entsprechend der ausgewählten Schaltpunktlinie aus der Schaltlinie, die zuerst die Kraftstoffsverbrauchseffizienz berücksichtigt, und der Schaltpunktlinie, die zuerst das leichte Beschleunigen/Verzögern berücksichtigt, anzeigt.

7. Getriebebetriebsanweisungsvorrichtung nach einem der Ansprüche 1 bis 6, wobei die Getriebebetriebsanweisungsanzeigeeinheit (30) die Anweisung für den Getriebebetrieb hervorgehoben anzeigt, wenn die Steuereinrichtung (10) die Anweisung für den Getriebebetrieb bei einem Schalten eines Ganges von nicht weniger als zwei ausgibt.

## Revendications

1. Dispositif d'instruction d'opération de transmission comprenant :
une unité d'affichage d'instruction d'opération de transmission (30) configurée pour afficher une opération de transmission pour une transmission manuelle (2) montée sur un véhicule (1) ;
des moyens de calcul de position de vitesse optimale (10) configurés pour calculer une position de vitesse optimale correspondant à une vitesse de véhicule et à un rapport d'ouverture de pédale d'accélérateur ou à un rapport d'ouverture de papillon ;
des moyens de jugement (10) configurés pour juger si, oui ou non, la position de vitesse optimale calculée est différente d'une position de vitesse actuelle de la transmission manuelle (2) ; et
des moyens de commande (10) configurés pour commander d'ordonner à l'unité d'affichage d'instruction d'opération de transmission (30) d'afficher une instruction pour l'opération de transmission lorsqu'un résultat de jugement des moyens de jugement (10) indique que la position de vitesse actuelle est différente de la position de vitesse optimale calculée, et les moyens de commande (10) étant configurés pour commander l'affichage de l'instruction pour l'opération de transmission sur l'unité d'affichage d'instruction d'opération de transmission (30) sur la base d'une condition de véhicule fournie par divers capteurs montés sur le véhicule (1),
**caractérisé en ce que**
les moyens de commande (10) sont en outre configurés pour commander l'affichage de l'instruction pour l'opération de transmission sur l'unité d'affichage d'instruction d'opération de transmission (30) sur la base d'informations fournies par une unité de navigation de véhicule (40) ;
dans lequel, lorsque les informations fournies par l'unité de navigation de véhicule (40) indiquent l'apparition d'un embouteillage dans une direction de déplacement du véhicule (1), les moyens de commande (10) estiment que le véhicule (1) vient juste d'atteindre une extrémité de queue d'une file de véhicules dans l'embouteillage lorsque le rapport d'ouverture de pédale d'accélérateur est diminué, et les moyens de commande (10) limitent la sortie de l'instruction, qui indique l'opération de transmission de passage à une position de vitesse supérieure, vers l'unité d'affichage d'instruction d'opération de transmission (30) tant qu'une vitesse d'accélération du véhicule (1) ne prend pas une valeur positive.

2. Dispositif d'instruction d'opération de transmission selon la revendication 1,
dans lequel les moyens de calcul de position de vitesse optimale (10) calculent la position de vitesse optimale correspondant à une vitesse de véhicule et à un rapport d'ouverture de pédale d'accélérateur ou à un rapport d'ouverture de papillon sur la base d'une ligne de points de changement de vitesse, et
les moyens de commande (10) estiment l'apparition d'un embouteillage dans une direction de déplacement du véhicule (1) sur la base d'un changement du rapport d'ouverture de pédale d'accélérateur, d'un enfoncement de pédale de frein du conducteur, et d'un changement de la vitesse de véhicule lorsque les informations fournies par l'unité de navigation de véhicule (40) indiquent que le véhicule (1) se déplace dans une zone urbaine, et
les moyens de commande (10) remplacent une ligne de points de changement de vitesse actuelle par une ligne de points de changement de vitesse en un petit nombre pour générer l'instruction pour l'opération de transmission, et ordonnent à l'unité d'affichage d'instruction d'opération de transmission (30) d'afficher l'instruction pour l'opération de transmission.

3. Dispositif d'instruction d'opération de transmission selon la revendication 1,
dans lequel les moyens de calcul de position de vitesse optimale (10) calculent la position de vitesse optimale correspondant à une vitesse de véhicule et à un rapport d'ouverture de pédale d'accélérateur ou à un rapport d'ouverture de papillon sur la base d'une ligne de points de changement de vitesse, et
les moyens de commande (10) sélectionnent l'une d'une ligne de points de changement de vitesse qui prend en considération en premier un rendement de consommation de carburant et d'une ligne de points de changement de vitesse qui prend en considération en premier une facilité d'accélération/décélération en sélectionnant une position de faible vitesse sur la base d'une modification du rapport d'ouverture de pédale d'accélérateur et d'une variation de la vitesse de véhicule lorsque les informations fournies par l'unité de navigation de véhicule (40) indiquent que le véhicule (1) se déplace en banlieue, et les moyens de commande (10) ordonnent à l'unité d'affichage d'instruction d'opération de transmission (30) d'afficher l'instruction pour l'opération de transmission.

4. Dispositif d'instruction d'opération de transmission selon la revendication 1, dans lequel:
les moyens de calcul de position de vitesse optimale (10) sont configurés pour calculer une position de vitesse optimale correspondant à une vitesse de véhicule et à un rapport d'ouverture de pédale d'accélérateur ou à un rapport d'ouverture de papillon sur la base d'une ligne de points de changement de vitesse ; et
les moyens de commande (10) sont configurés pour sélectionner l'une d'une ligne de points de changement de vitesse qui prend en considération en premier un rendement de consommation de carburant et d'une ligne de points de changement de vitesse qui prend en considération en premier une facilité d'accélération/décélération en sélectionnant une position de faible vitesse sur la base d'une opération de commutation du conducteur, et pour ordonner à l'unité d'affichage d'instruction d'opération de transmission (30) d'afficher l'instruction pour l'opération de transmission sur la base de la ligne de points de changement de vitesse sélectionnée.

5. Dispositif d'instruction d'opération de transmission selon la revendication 1,
dans lequel les moyens de commande (10) calculent :
une vitesse de véhicule estimée sur la base d'une distance jusqu'à un point de braquage basée sur des informations fournies par l'unité de navigation de véhicule (40) et la vitesse d'accélération du véhicule (1) ;
calculent une vitesse de véhicule cible à laquelle le conducteur du véhicule (1) aborde facilement un virage ou une intersection sur la base d'un angle de braquage au point de braquage fourni par l'unité de navigation de véhicule (40) ; et
ordonnent à l'unité d'affichage d'instruction d'opération de transmission (30) d'afficher l'instruction pour l'opération de transmission de passage à une position de faible vitesse lorsque les moyens de commande (10) jugent qu'il est nécessaire de diminuer davantage une vitesse de véhicule actuelle sur la base d'un résultat de comparaison entre les indications de vitesse de véhicule cible et de vitesse de véhicule estimée.

6. Dispositif d'instruction d'opération de transmission selon la revendication 3 ou 4, dans lequel l'unité d'affichage d'instruction d'opération de transmission (30) affiche l'instruction pour l'opération de transmission avec différents types d'affichages en fonction de la ligne sélectionnée parmi la ligne de points de changement de vitesse qui prend en considération en premier le rendement de consommation de carburant et la ligne de points de changement de vitesse qui prend en considération en premier la facilité d'accélération/décélération.

7. Dispositif d'instruction d'opération de transmission selon l'une quelconque des revendications 1 à 6, dans lequel l'unité d'affichage d'instruction d'opération de transmission (30) affiche avec une mise en évidence l'instruction de l'opération de transmission lorsque les moyens de commande (10) délivrent l'instruction pour l'opération de transmission lors d'un changement de vitesse supérieur ou égal à deux.
